# EUROPEAN PATENT SPECIFICATION

(11) **EP 3 910 555 B1**
(45) Date of publication and mention of the grant of the patent: **26.03.2025**
(21) Application number: 20174118.8
(22) Date of filing: 12.05.2020
(51) Int. Cl.: G06N 3/048, G06N 3/063, G06N 3/084, G06N 3/088, G06N 5/045, G06N 3/045

(54) **NEURAL NETWORK SECURITY**
NEURONALE NETZWERKSICHERHEIT
SÉCURITÉ DE RÉSEAU NEURONAL

(43) Date of publication of application: 17.11.2021
(73) Proprietor: Infineon Technologies AG, 85579 Neubiberg (DE)
(72) Inventor: LEONG, Wen Xin, Singapore 164006 (SG)
(74) Representative: Viering, Jentschura & Partner mbB Patent- und Rechtsanwälte

(56) References cited:
- EP-A1- 3 396 531
- EP-A1- 3 598 345
- US-A1- 2020 104 673
- US-A1- 2020 184 036
- CHEN MINGLIANG ET AL: "Protect Your Deep Neural Networks from Piracy", 2018 IEEE INTERNATIONAL WORKSHOP ON INFORMATION FORENSICS AND SECURITY (WIFS), IEEE, 11 December 2018 (2018-12-11), pages 1 - 7, XP033511106, DOI: 10.1109/WIFS.2018.8630791
- NAVEEN MELLEMPUDI ET AL: "Mixed Precision Training With 8-bit Floating Point", 29 May 2019 (2019-05-29), XP055730096, Retrieved from the Internet <URL:https://arxiv.org/pdf/1905.12334.pdf>

## Description

### Technical Field

Various embodiments relate generally to securing a neural network against replication through brute force attack.

### Background

Neural networks may be utilized to perform a variety of computational tasks. They may be well-suited for many activities and have been particularly valuable in pattern recognition, classification, and other tasks involving the solving of complex-problems.

Neural networks are loosely structures to imitate human brain, in that they may contain highly interconnected entities that may be conventionally called units or nodes, which may be analogized to a neuron in the brain. Nodes node may be associated with one or more node parameters. A typical neural network may include a plurality of algorithms, which may model data by using neurons for machine learning.

Neural networks are trained to perform their desired function. Training a neural network may require significant effort and resources. For example, a neural network's training may include analysis of vast amounts of data to determine patterns within said data. This process may require significant resources in terms of data quantity, time, and human factors such as data analysis, output analysis, weight modification, bias, etc. Once a neural network has been trained, the parameters of the trained model may be understood as the assets of the neural network. Thus, the value of the neural network as property may be largely dependent on the functionality of the neural network's parameters and/or the ability to protect these parameters from theft, imitation, or other unauthorized use or distribution.

Protection of neural networks is known in at least Chen Mingliang et al., "Protect Your Deep Neural Networks from Piracy", 2018 IEEE International Workshop on Information Forensics and Security (WIFS), IEEE, 11 December 2018 (2018-12-11), pages 1-7, DOI: 10.1109/WIFS.2018.8630791 (hereinafter "Chen"). Chen describes a framework to provide access control to the trained deep neural networks so that only authorized users can utilize them properly. The proposed framework is capable of keeping the DNNs functional to authorized access while dysfunctional to unauthorized access or illicit use. The security of the proposed framework is examined against the potential attacks from unauthorized users. The experimental results show that the trained DNN models under the proposed framework maintain high accuracy to authorized access while having a low accuracy to unauthorized users, and they are resistant to several types of attacks.

Parallel processor use in machine learning algorithms is known in at least EP 3 396 531 A1 (Intel Corp [US]) 31 October 2018 (2018-10-31) (hereinafter "Sarel"), which discloses an apparatus comprising a plurality of execution units that comprise at least a first type of execution unit and a second type of execution unit and logic, at least partially including hardware logic, to expose embedded cast operations in at least one of a load instruction or a store instruction; determining a target precision level for the cast operations; and loading the cast operations at the target precision level.

Reduced precision computation for deep neural networks is known in at least Naveen Mellempudi et al., "Mixed Precision Training With 8-Bit Floating Point", 29 May 2019 (2019-05-29), , https://arxiv.org/pdf/1905.12334.pdf.

### Summary of the Invention

The invention is defined in the appended independent claims 1, 7 and 10. Preferred embodiments of the invention are set out in the appended dependent claims.

### Brief Description of the Drawings

Throughout the drawings, it should be noted that like reference numbers are used to depict the same or similar elements, features, and structures. The drawings are not necessarily to scale, emphasis instead generally being placed upon illustrating aspects of the disclosure. In the following description, some aspects of the disclosure are described with reference to the following drawings, in which:
FIG. **1** depicts a structure of a neural network;
FIG. **2** depicts the calculation of a neural network to arrive at a confidence level of a classification;
FIG. **3** depicts a neural network, configured in a funnel shape;
FIG. **4** depicts a neural network for which the final layers of the one or more second layers do not follow a funnel shape; and
FIG. **5** depicts the selection of one or more final layers of the neural network for inclusion in a secured neural network controller;
FIG. **6** depicts rounding of an output of an activation function;
FIG. **7** depicts a neural network configuration according to another aspect of the disclosure;
FIG. **8** depicts a neural network controller; and
FIG. **9** includes a method of implementing a neural network.

### Description

The following detailed description refers to the accompanying drawings that show, by way of illustration, specific details and aspects in which the disclosure may be practiced. These aspects are described in sufficient detail to enable those skilled in the art to practice the disclosure. Various aspects are described in connection with methods and various aspects are described in connection with devices. However, it may be understood that aspects described in connection with methods may similarly apply to the devices, and vice versa.

The word "exemplary" is used herein to mean "serving as an example, instance, or illustration." Any embodiment or design described herein as "exemplary" is not necessarily to be construed as preferred or advantageous over other embodiments or designs.

Throughout the drawings, it should be noted that like reference numbers are used to depict the same or similar elements, features, and structures.

The terms "at least one" and "one or more" may be understood to include a numerical quantity greater than or equal to one (e.g., one, two, three, four, etc.). The term "a plurality" may be understood to include a numerical quantity greater than or equal to two (e.g., two, three, four, five, [...], etc.).

The phrase "at least one of" with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of listed elements.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more. The terms "proper subset", "reduced subset", and "lesser subset" refer to a subset of a set that is not equal to the set, i.e. a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term data, however, is not limited to the aforementioned examples and may take various forms and represent any information as understood in the art.

The term "processor" or "controller" as, for example, used herein may be understood as any kind of entity that allows handling data, signals, etc. The data, signals, etc. may be handled according to one or more specific functions executed by the processor or controller.

A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The term "system" (e.g., a drive system, a position detection system, etc.) detailed herein may be understood as a set of interacting elements, the elements may be, by way of example and not of limitation, one or more mechanical components, one or more electrical components, one or more instructions (e.g., encoded in storage media), one or more controllers, etc.

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit ("CPU"), Graphics Processing Unit ("GPU"), Digital Signal Processor ("DSP"), Field Programmable Gate Array ("FPGA"), integrated circuit, Application Specific Integrated Circuit ("ASIC"), etc., or any combination thereof. Any other kind of implementation of the respective functions which will be described below in further detail may also be understood as a "circuit." It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component including one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

A neural network, or an artificial neural network, is a type of computing system that is patterned after biological neural networks within animal brains. Neural networks may include a collection of connected units or nodes, which function as a type of artificial neuron. The nodes may be connected to one another, said connections permitting transmission of information or calculation results between neurons and thereby functioning much like synapses in an animal brain. The nodes may be connected to one another such that the output of one or more nodes becomes the input of one or more other nodes. A neural network may be characterized, for example, by its weights and biases. Each node-to-node connector may have a weight. Each node may have a bias. Neural networks may rely on weights and biases for their calculations. That is, each link between nodes may include a weight, said weight determining the strength of a node's output value on the receiving node, to which the output value is input. Each link may also include a bias, which may adjust the output of a node along with the weighted sum of the inputs to the node. The bias may by a constant that is added to the weighted sum. Any given node may have multiple input and multiple output connections.

Nodes may be organized into layers. Layers may be structured such that nodes in a given layer only connect to nodes in an adjacent layer. That is, in any given layer *b*, the nodes of layer *b* may connect only to other nodes of previous layer *a,* and to nodes of subsequent layer c. For the purposes of this Disclosure, layers will be described as being arranged within one of three groups; a first layer; one or more second layers; or a third layer. A first layer may receive input data. The one or more second layers may receive output of the nodes of the first layer or a previous second layer, and may perform various neural network computations. A third layer may receive the output of the last layer of the one or more second layers. According to one naming convention of neural networking, the first layer may be conventionally called the input layer, the one or more second layers may be conventionally called the one or more hidden layers, and the third layer may be conventionally called the output layer; however, said naming convention is used herein merely for illustrative purposes and is not intended to be limiting. Nothing in this disclosure should be considered limited to an implementation of a neural network that follows the naming convention of an input layer, one or more hidden layers, and an output layer.

The structure of a neural network (e.g., its nodes, their organization, their connections, weights, and biases, etc.) may be viewed as the assets of a neural network. Such assets may require substantial resources (e.g., data, time, money, etc.) to develop and train. At the same time, these assets of a neural network may be vulnerable to replication (e.g., theft by copying the neural network).

Neural networks may be employed for any of a wide variety of technical purposes. Examples of such technical purposes include, but are not limited to, pattern recognition, image identification, classification, forecasting, customer research, data validation, and risk management. Neural networks may offer several advantages over conventional models (e.g., linear or non-linear, variable-based models), as neural networks may be able to function at high-levels in the context of multiple unknowns, and they may be particularly tolerant to noisy data.

Neural networks require training to achieve their desired purposes. Once a neural network has been designed and structured for its given purpose, its initial weights and/or biases may be selected (e.g., randomly selected), and then the neural network is provided with training data. With each set of training data, the neural network analyses the data using its weights, biases, and functions, and the resulting outputs are compared against the desired outputs. Errors (e.g., differences between the resulting outputs and the desired outputs) may be back-propagated through the network, and the weights and/or biases may be adjusted accordingly, such that a resulting output more closely approximates the desired output. This is usually continued over many data sets to achieve a trained neural network that predictable yields acceptable results.

Once a neural network is trained, its structure, functions, biases, and/or weights are its assets, which may require protection. To protect the integrity of a neural network, and to help protect the neural network from theft, the neural network may conventionally be stored within a secure element or blackbox. Such a secure element or blackbox may provide increased security and may protect the neural network itself, its structures, and its calculations from the being directly observed, and therefore from being directly copied. A secure element or blackbox alone, however, will not protect a neural network against unauthorized replication using a brute force attack. In a simplistic version of such a brute force attack, an outside observer may select a target neural network for replication; feed a known input into the target neural network; and record an output of the target neural network. This same known input may be entered into a second neural network, and the second neural network may be changed or configured until its output matches or approximates the recorded output of the target neural network. By repeating this with different inputs, a target neural network can be essentially replicated. This may be conventionally called brute force replication of a neural network. Such unauthorized replication of a neural network may dilute or devalue one's property interest in a neural network, and therefore it may be desired to protect a neural network from reproduction from brute force attack.

Mere use of a blackbox or secure element is unlikely to hinder such a brute force attack because the final calculations of the neural network (e.g., the probability that a given input corresponds to a particular category) should generally be output outside of the secure element or blackbox, thereby exposing the outputs for outside observance and therefore making them vulnerable to brute force attack. That is, whereas brute force efforts to crack a standard encryption scheme, for example AES-128, may require determination of 2¹²⁸ variables, the number of variables to determine in a standard neural network may be significantly fewer, rendering brute force attack a viable option, provided that the output of the neural network is visible to an outside observer.

Proprietary information may be conventionally protected by use of one or more homomorphic encryption strategies. Such homomorphic encryption strategies may be poorly suited for use with a neural network, however, as these strategies are associated with significantly slowing of internal calculations. Since neural networks often require vast numbers of internal calculations, and the use of said encryption strategies is associated with reduction of the speed of each internal calculation. These reductions in speed accumulate quickly in the context of a neural network and degrade performance sufficiently to render the neural network functionality undesirable or unacceptable.

Most efforts to protect the property interest in neural network parameters utilize a procedure conventionally called watermarking, which essentially involves recording the neural network output from various neural network inputs. An idea behind watermarking is simply that the internal neural network parameters are sufficiently complex as to render the neural network unique, and therefore a specific set of data input for a given neural network should always result in a unique and recognizable output. Under this theory, if a second neural network receives the same set of data input and, as a result, yields the same unique and recognizable output, it may be assumed that the second neural network is a copy or approximation of the first neural network. Although watermarking may increase security by identifying copies of neural networks, watermarking does not help to preclude neural networks from being copied.

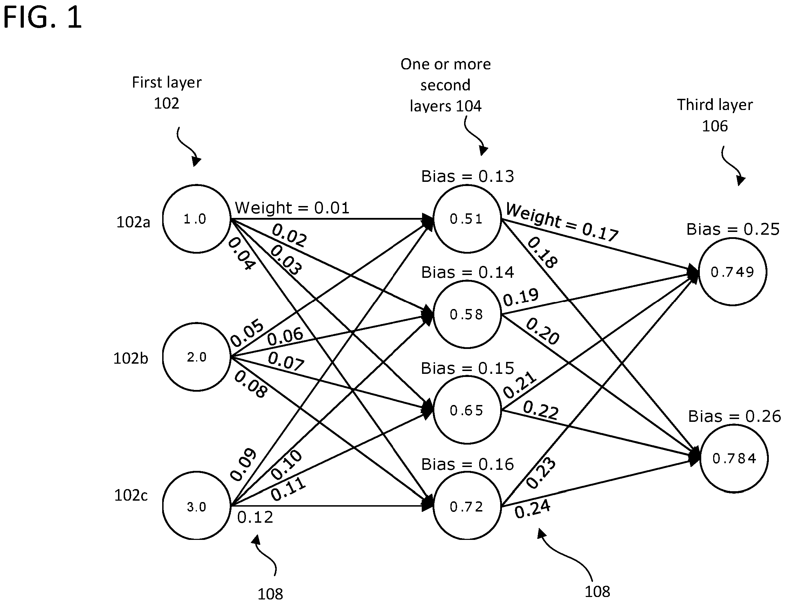

FIG. 1 depicts a structure of a neural network. In this figure, the neural network includes a first layer 102, one or more second layers 104, and a third layer 106. In this image, only one layer is depicted as the one or more second layers 104; however, it is expressly disclosed that the one or more second layers may include any number of layers, without limitation. Each layer (whether the first layer, the one or more second layers, or the third layer), includes one or more nodes, depicted herein for demonstrative purposes as 102a, 102b, and 102c. Each node may be configured to perform a given calculation. The results of the given calculation for a node may be distributed to the nodes of the next layer. In this distribution from a node of one layer to a note of a next layer, the calculation results may be given a specific weight 108. The inclusion of the weight 108 determines the influence of a given node's calculation on the overall result. The calculations of a node may be modified or influenced by a bias, which may be a constant that is added to the weighted sum of the calculations.

In FIG. 1, the nodes are depicted as including a number. This number within the nodes is a result of a node calculation. First layer 102 nodes 102a, 102b, and 102c are depicted as including neural network inputs 1.0, 2.0, and 3.0. Along the connections between the nodes, such as the connections between the first layer 102 nodes and the second layer 104 nodes, various exemplary weights are depicted. The second layer 104 nodes and the third layer 106 nodes are depicted with exemplary biases. The third layer 106 nodes are depicted as including the numbers 0.749 and 0.784, which are outputs of the neural network. It is expressly noted that the configuration and variables described herein are provided for demonstrative purposes and are not intended to be limiting. That is, the precision-altering techniques described herein can be applied to any neural network, whether a neural network or fewer or more layer, a network with fewer or more calculation factors (e.g., weights, biases, etc.), or otherwise.

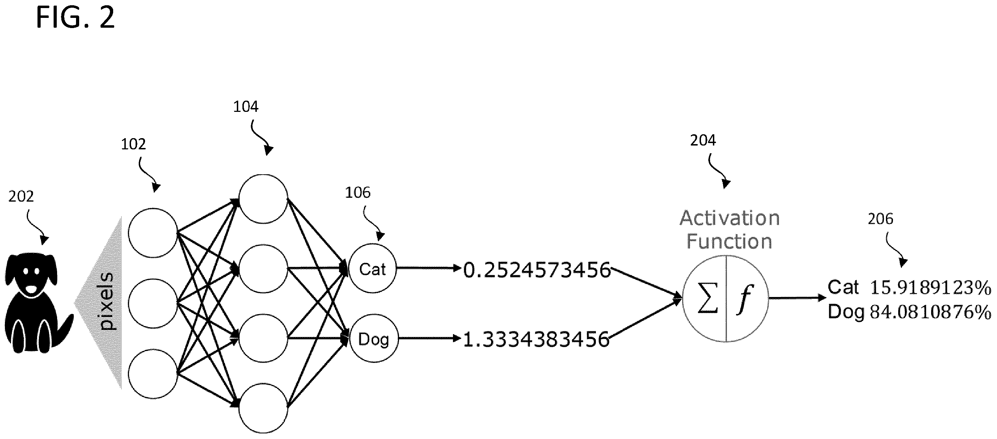

FIG. 2 depicts the calculation of a neural network to arrive at a confidence level of a classification. In this figure, the first layer 102, the one or more second layers 104, and the third layer 106 are arranged as depicted in FIG. 1. The first layer 102 receives data, which in this case, and for demonstrative purposes, is depicted as an image of a dog 202. The first node 102, the one or more second nodes 104, and the third node 106 include various operations, weights, and biases, which, in this example, are aimed toward arriving at a classification of the input data, and a confidence of the classification. As shown in third node 106, the neural network is designed in this example to classify the input data as being either an image of a dog or a cat. The third node 106 may output data representing the mathematical calculations within the prior nodes, said output data indicating a likelihood of the corresponding classification. The skilled person will understand that the neural network may be employed to perform any wide breadth of operations and is not limited to the specific example described herein. A output of the neural network may be binary (e.g., limited to two categories) as disclosed herein, or may include three or more categories, as well as a likelihood of membership within the various categories.

An activation function 204 may perform one or more calculations on an output of the third node 106. An output of the activation function 204 may, for example, indicate a percent of certainty as to the classification 206. For example, in the case depicted in FIG. 2, the result of the activation function 204 is a 15.9189123% certainty that the subject 202 is a cat, and an 84.0810876% chance of certainty that the subject is a dog. Thus, the neural network has recognized a greater likelihood that the input data corresponds to a dog into a cat.

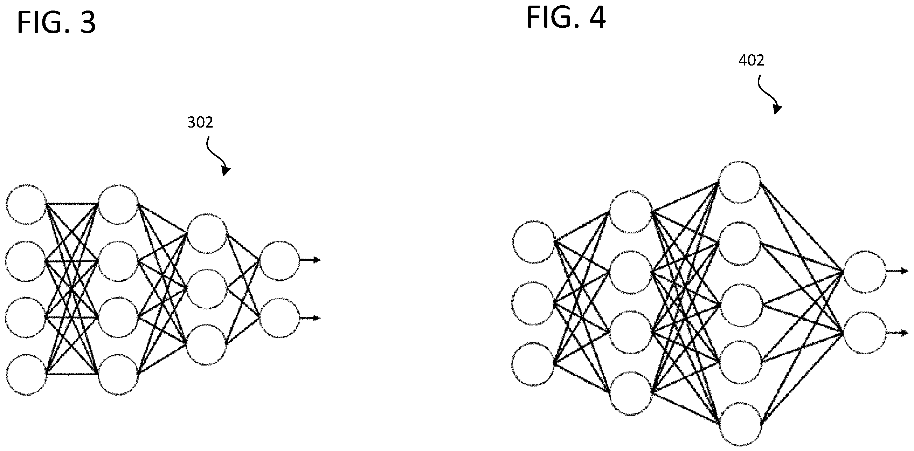

FIG. 3 depicts a funnel shape of a neural network 302. According to an aspect of the disclosure, and depending on the implementation, it may be desirable to employ a funnel structure for the nodes of the one or more second layers and the third layer, to reduce the number of nodes within the last few layers to be processed. As a general proposition, the one or more second layers of the neural network may include any number of nodes. It may be preferred to arrange the layers and nodes such that a number of nodes generally decreases toward the end of the one or more second layers, until reaching the third layer. That is, in the case that multiple layers are present within the one or more second layers, a final portion of the one or more second layers may be structured to reduce its number of nodes per layer in a generally stepwise fashion. For example, a given layer toward the end of the one or more second layers may include *n* nodes, and a next layer of the one or more second layers may include *n, n - 1*, or *n - (1*+*r)* nodes, wherein *n and r* are positive integers. It is specifically stated that the principles and methods disclosed herein may be performed in circumstances in which the end layers do not have a funnel shape; however, creating a funnel shape may simplify secure implementation of the final layers of the neural network, as disclosed herein.

In contrast to FIG. 3, FIG. 4 depicts a neural network for which the final layers of the one or more second layers do not follow a funnel shape, but rather maintain size or increase in size, such that a large number of nodes output into the third layer 402. Although the principles and methods disclosed herein for neural network security may be implemented in such a node/layer arrangement, and arrangement as indicated in FIG. 4 may require significant additional calculations in the final neural network controller. This may create additional challenges in transferring these data to the neural network controller, or in requiring the neural network controller to process these data, in the event that a simple neural network controller that may be unsuitable for large data processing is selected.

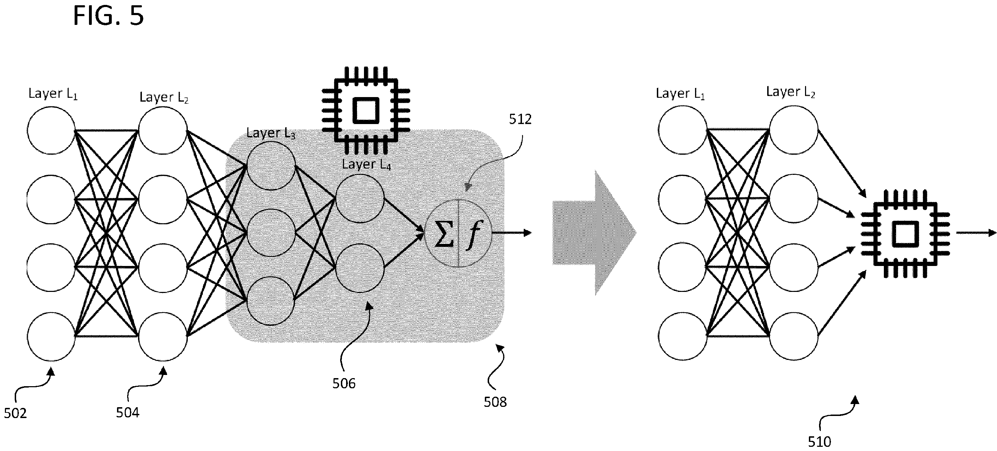

FIG. 5 depicts the selection of one or more final layers of the neural network for inclusion in a secured neural network controller. In this figure, a neural network is depicted, including a first layer 502, one or more second layers 504, and a third layer (e.g. a final layer) 506. In this particular example, a last layer of the one or more second layers (labeled as layer L₃) and the third layer (labeled as layer L₄) are included in a secured neural network controller 508. That is, output from the node of the penultimate one or more second layers is transmitted to the secured neural network controller 508 for further processing. Inside the secured neural network controller 508, the final layer of the one or more second layers and the third layer are processed, and the activation function is carried out. In this manner, these final calculations become un-viewable or opaque to outside observers. Otherwise stated, the secured neural network controller provides an element of security that prevents outside observers from viewing the calculations performed within the secured neural network controller. This security is represented by 510, in which the calculations of previous layers are viewable to an outside observer; however, the results of the calculations within the secured neural network controller are not viewable to an outside observer.

Of particular note, the activation function 512 may be configured to provide additional security by reducing a level of precision of its output. As depicted in FIG. 2, the third layer will be subject to an activation function, which may be configured to convert raw data into a probability or percentage. Under conventional implementation of an activation function within a neural network, the results or output of the activation function may be rendered to a high degree of precision. That is, the output may conventionally be to the maximum level of precision permitted for the datatype used for the node calculations and/or the activation function. In the example shown in FIG. 2, the activation function renders an output up to eight decimal places.

Although the final calculations may be performed within the secured neural network controller, it may be desirable for the secured neural network controller to output a result of its calculations, such as to output a class probability. This output of data makes the secured neural network controller, and consequently its neural network, subject to replication by brute force attack. That is, for any given input into the neural network, a known output is expected. As stated above, neural network attackers wishing to replicate the neural network may take a known input and known output of a first neural network (e.g. a neural network to be copied) and feed the known input into a second neural network e.g. a neural network to be patterned after the first neural network). The output of the second neural network can be compared to the output of the first neural network. Assuming that an output of the second neural network differs from the output of the first neural network, one or more nodes, weights, or biases of the second neural network may be changed to yield a different data result. Because the output of the final activation function is conventionally at a high level of precision, even small changes within the neural network's nodes, weights, or biases may be observable in an output of the neural network. Such changes may be undertaken until the output of the second neural network resembles the output of the first neural network.

This method of brute force attack is prevented or hindered by reducing level of precision of the neural network output. That is, an output of the final activation function, normally to a high degree of precision, is reduced to a lower degree of precision, and this lower degree of precision output can then be transferred outside of the secured neural network controller, where it can be viewed by outside observers. By reducing a level of precision of the output, the effects of adjustments to the nodes, weights, or biases of the neural network may not be readily apparent in the neural network output itself. This lack of feedback with respect to the neural network output may preclude brute force attacks and thus maintain the uniqueness of the neural network.

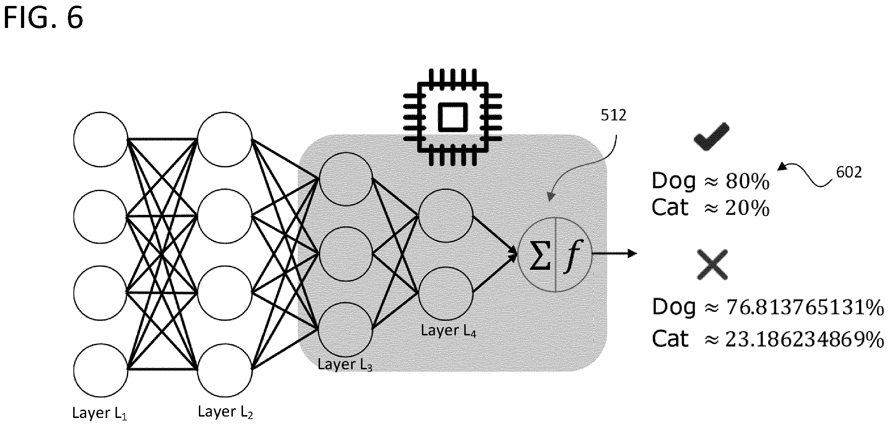

This rounding of an output of an activation function can be seen in FIG. 6. In this figure, at least the output of layer 3 and the activation function are performed within the secured neural network controller 512. The activation function is configured to reduce a level of precision of its output, such that the result that is output from the secured neural network controller has a lower level of precision than a level of precision utilized in calculating the outputs of other nodes in the neural network. For example, in this case, the probability output shown in FIG. 6 (Dog=76.813765131% and Cat=23.186234869%) is output with a reduced level of precision, as indicated by 602, in which the probability is shown as Dog≈80% and Cat≈20%.

This reduction in precision yields at least two desired results. First, the reduced precision output maintains sufficient precision to yield meaningful results. Second, the reduced precision output lacks sufficient precision to provide a brute force attacker with meaningful information to copy or imitate the neural network. Regarding this first desired result, the output of the reduced precision neural network activation function yields, on a practical level, the same result. That is, the input is more likely to be a dog than a cat. Where classification is the desired output, it may suffice for the output to indicate the classification with the highest probability, and as long as the reduced level of precision does not change the classification with the highest level of probability, the level of precision may be significantly reduced without adverse effects. With regard to the second desired result, and by reducing this level of precision, small changes of a node's weights and/or biases would not be expected to yield a different final result. Thus, reducing the level of precision hinders a brute force attack while maintaining the usefulness of the neural network calculations.

The reduction in a level of precision includes one or more rounding operations. The eight-decimal output of FIG. 6 may be reduced to a seven-decimal output, a six-decimal output, a five-decimal output, a four-decimal output, a three-decimal output, a two-decimal output, a one-decimal output, or an output with no decimals. Any one of these outputs is rounded.

More concretely, the output from FIG. 6 showing Dog = 76.813765131% and Cat=23.186234869% may be output according to a second level of precision as any of:

| | |
|---|---|
| Dog=76.81376513% | Cat=23.18623486% |
| Dog=76.8137651% | Cat=23.1862349% |
| Dog=76.813765% | Cat=23.186235% |
| Dog=76.81377% | Cat=23.18624% |
| Dog=76.8138% | Cat=23.1862% |
| Dog=76.814% | Cat=23.186% |
| Dog=76.81 % | Cat=23.19% |
| Dog=76.8% | Cat=23.1 % |
| Dog=77% | Cat=23% |
| Dog=80% | Cat=20% |
| Dog=100% | Cat=0% |

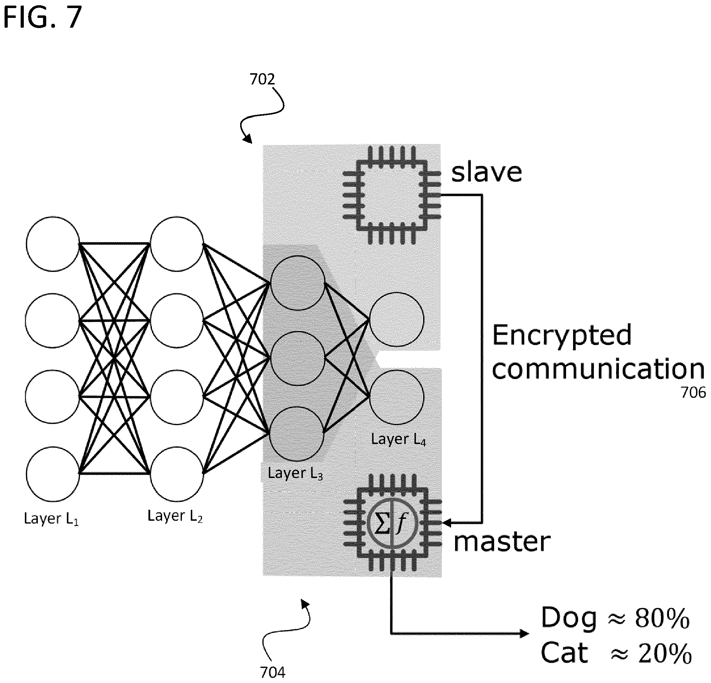

FIG. 7 shows a neural network configuration according to the disclosure. According to this disclosure, one or more layers of the one or more second layers and/or one or more nodes of the third layer are implemented using a plurality of controllers, designated as one or more slave controllers 702 and a master controller 704. That is, rather than selecting the third layer and optionally one or more of the one or more second layers for processing within the secured neural network controller, a plurality of secured neural network controllers are utilized for this purpose. Depending on the implementation (e.g. depending on the quality of the secured neural network controller), it may be desirable to use a plurality of secured neural network controllers to perform the last calculations of the neural network. This may, for example, result in increased speed of the neural network processing. Additionally, and in some implementations, a low-end secured neural network controller may be unable to calculate, or otherwise experience difficulty with the calculation of the final neural network calculations. Whatever the rationale, a plurality of secured neural network controllers are utilized for this purpose. In this situation, fewer than all of the final layers and/or nodes for calculation within a secure controller are sent to the master secured neural network controller 704, and the remaining final layers and/or nodes are sent to one or more slave secured neural network controllers 702. Each of the one or more secured slave neural network controllers 702 performs the calculations for the layers and/or nodes sent to that corresponding slave secured neural network controller, and the output of the slave secured network controller is sent to the master secured network controller 704. When all calculations are complete and have been received within the master secured neural network controller 704, a final activation function is performed in which the level of precision is reduced from a first level of precision to the second level of precision. Because the level of precision is first reduced in the master neural network controller 704, the calculation results of the one or more slave controllers are at the first level of precision (e.g., not reduced) and are transferred in an encrypted fashion from the slave neural network controller 702 to the master neural network controller 704, as shown by the encrypted communication 706. Said encryption reduces an ability of outside observers from intercepting data at a high level of precision (the first level of precision) from the slave to the master. Because the data transferred from a given slave to the master controller need only be transmitted once, and reduction in speed resulting from the use of an encryption strategy is minimal.

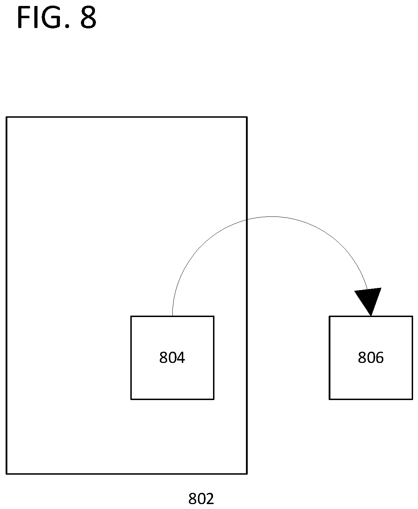

FIG. 8 depicts a neural network controller 802, configured to implement a neural network, the neural network including: a first layer; one or more second layers; and a third layer; wherein each layer of the first layer, the one or more second layers, and the third layer includes one or more nodes; wherein at least one node of the one or more second layers is configured to provide an output value at a first level of precision 804; wherein the neural network controller is configured to implement a precision reduction function to reduce an output value of at least one node of the third layer to a second level of precision 806; and wherein the second level of precision 806 is less precise than the first level of precision 804.

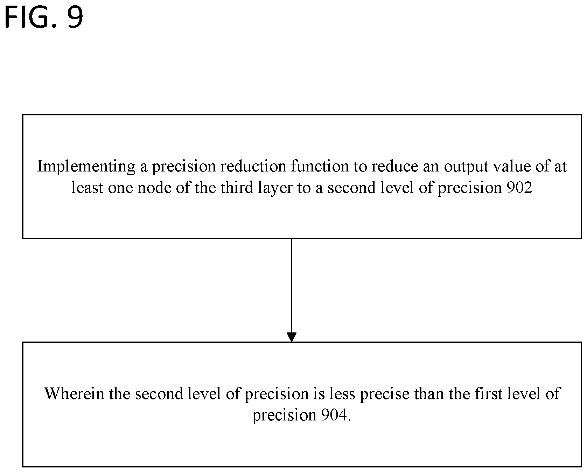

FIG. 9 includes a method of implementing a neural network, configured to implement a neural network, the neural network including a first layer; one or more second layers; and a third layer; wherein each layer of the first layer, the one or more second layers, and the third layer includes one or more nodes; and wherein at least one node of the one or more second layers is configured to provide an output value at a first level of precision; further including implementing a precision reduction function to reduce an output value of at least one node of the third layer to a second level of precision 902; and wherein the second level of precision is less precise than the first level of precision 904.

The neural network controller is configured to implement a neural network. The neural network may be implemented according to any conventional neural network schema. The neural network includes, a first layer; one or more second layers; and a third layer, wherein each layer of the first layer, the one or more second layers, and the third layer include one or more nodes; wherein at least one node of the one or more second layers is configured to provide an output value at a first level of precision; wherein the neural network controller is configured to implement a precision reduction function to reduce an output value of at least one node of the third layer to a second level of precision; and wherein the second level of precision is less precise than the first level of precision.

According to an aspect of the disclosure, the implementation of the neural network is performed across a plurality of processors. The plurality of processors may be divided into two or more groups, such that one or more first processors implement one or more first nodes of the neural network and one or more second processors implement one or more second nodes of the neural network.

This implementation of the neural network across a plurality of processors is understood through a division of the neural network into two groups, a first group of layers implemented in any number of first processors, and a second group of layers implemented in the neural network controller. As described herein, the neural network controller may be configured to receive data and perform only the final activation function, receive data and perform only the third layer calculation and the final activation function, or receive data and perform calculations for any number of layers of the one or more second layers, the third layer, and the final activation function. Whatever the configuration for the number and/or type of functions/calculations performed in the neural network controller, these may be understood, for the purpose of describing distribution of calculations among a plurality of processors, as the calculations of the second group. The calculations of the first group may be understood as any calculations coming before the calculations of the second group (e.g. first layer calculations, optionally one or more second calculator calculations not performed by the second group, and/or optionally third layer calculations not performed by the second group).

The calculations for the first group may be performed by one or more first processors. That is, one or more first processors may be configured to carry out all of the calculations of the first group. Alternatively, the one or more first processors may be configured as a plurality of first processors, and the various first group functions may be divided among the plurality of first processors for calculation. In this manner, a first processor of the first group may carry out a first portion of first group calculations; a second processor of the first group may receive the output of the first group processor and may carry out a second portion of the first group calculations; a third first group processor may receive the output of the second first group processor and may carry out a third portion of the first group calculations, and so on. This may be performed for any number of first group processors, without limitation.

When the first group calculations are complete, the result(s) of the first group calculations may be sent to the neural network controller for final processing. Any remaining calculations of one or more layers may be performed within the neural network controller, as desired for the given implementation. The final reduction of a level of precision is performed within the neural network controller. Any output of the neural network controller is at the second level of precision. That is, the first level of precision (e.g. a higher level of precision) is output from the neural network controller, to hinder a brute force attack and to maintain the integrity of the neural network weights, biases, and calculations.

According to another aspect of the disclosure, any calculation of the neural network, except for the reduction in precision from the first precision level to the second precision level, may be performed in one or more first processors, separate from the neural network controller, and the results of these calculations may be sent to the neural network controller for the reduction in precision. Using this configuration, the neural network controller may perform primarily or exclusively the function of a reduction in precision from the first precision level to the second precision level. The transfer of data (e.g. the calculation results from the neural network layers) may be performed using one or more encryption techniques. Because the data to be transferred to the neural network controller has not been reduced from the first level of precision to the second level of precision, the transfer of data should be achieved using one or more encryption strategies to preclude or reduce the likelihood of an outside observer viewing the transferred data at the first level of precision. In the event that an encryption strategy is used, any encryption strategy may be employed, without limitation.

An output value of at least one node of the third layer is reduced from the first precision level to the second precision level. This reduction in precision may be implemented in any of a variety of ways, depending on the desired configuration. Various examples of how to change an output value of the third layer from the first precision level to the second precision level include, but are not limited to, reducing the level of precision in the third layer, reducing the level of precision in the activation function for the third layer, reducing the level of precision of a result of the activation function of the third layer, or any combination thereof.

The reduced level of precision may be stored in the neural network controller and/or output from the neural network controller. According to one aspect of the disclosure, the neural network controller may include one or more storage devices (e.g. memory) onto which an output at the second level of precision may be written/in which an output at the second level of precision may be stored. Said memory may be volatile memory or non-volatile memory. Said memory may be configured as a non-transitory computer readable medium. Alternatively or additionally, the output at the second level of precision may be sent or output from the neural network controller to one or more other devices, without limitation.

According to another aspect of the disclosure, the neural network controller may be configured to receive an output value of at least one node of the third layer, said output value being at the first level of precision (e.g. the higher level of precision). The neural network controller may be configured to implement the precision reduction function on the output value of the at least one node of the third layer to reduce the output value of the at least one node of the third layer to the second level of precision.

According to the disclosure, the reduction in precision is a rounding function. That is, an output of the third layer and/or an output of the activation function, is rounded to reduce the level of precision. The rounding may be performed at any desired magnitude to reach the desired level of precision for the second precision level. Said rounding operation may include, but not be limited to, rounding an input of the rounding function to a number of decimals corresponding to the input value; rounding an input of the rounding function to a number of decimals fewer than the input value; or rounding an input of the rounding function to a binary result or integer. In neural networks used for classification purposes, the output of the neural network may be understood to be a probability of each of two or more classifications. The probability may be understood as a percent or, more commonly, a number ranging from 0 to 1, wherein zero represents a 0% chance of probability, and one represents 100% chance of probability. According to an aspect of the disclosure, the rounding function may be performed to provide a binary result, either one or zero, such that the results of one category is equal to one or 100%, and the result of all other categories is equal to zero or 0%.

As an alternative not covered by the claims to a rounding operation, the second precision level may be configured as a removal or cut-off of one or more decimal places. That is, should the data of the first precision level be written with n decimal places, the second precision level may include reducing the number of decimal places to range from *n - 1* decimal places to *zero decimal places.*

According to an aspect of the disclosure, the neural network controller may be implemented as a secure element. A secure element may be generally understood as a tamper-resistant hardware platform, which may be capable of hosting one or more applications and/or storing confidential data in a secure manner. Secure elements may be implemented using a variety of platforms, software, and/or hardware. The secure element may be a computer-on-of-ship or a microprocessor for performing cryptographic operations. The secure processor may be tamper-resistant. The secure element may be configured not to reveal security keys or executable instructions on a bus, except an encrypted form. One or more security chips of the secured processor may be potted in a hardware security module, such that any attempts to remove the potting will result in the security chip being zeroed.

According to an aspect of the disclosure, the second level of precision may be configurable as one of a plurality of possible second precision levels. That is, rather than having a single, fixed second precision level, it may be possible to select any of a plurality of second precision levels. The selection of the number of decimal places may be performed using any criteria whatsoever, without limitation. The selection of the number of decimal places may be generally understood as a trade-off between precision and security. That is, maintaining an output at a high level of precision may render the underlying neural network more subject to replication through brute force attack. Conversely, reducing the output to a relatively low level of precision may render the underlying neural network less subject to replication through brute force attack; however, the resulting output (e.g. the classification results) will be less precise.

According to an aspect of the disclosure, the selection of a precision level for the second precision level may be monetized. That is, entities with a property interest in a neural network (e.g. owners of a neural network, or potentially developers, programmers, trainers of a neural network, or otherwise) may have an interest in maintaining their property interest in the neural network, which may closely correspond to maintaining a uniqueness of the neural network. Otherwise stated, those with property interests in a neural network may be motivated to preclude the neural network from, or reduce the likelihood of, replication of the neural network through brute force attack. Conversely, an end-user may desire a neural network providing a high level of precision in its output. These interests may be in opposition to one another under certain circumstances. Accordingly, it may be possible to select a second level of precision with a relatively low precision value to better maintain the property interest in the neural network, or it may be possible to select a second level of precision with a relatively high precision value to satisfy the needs and/or desires of the end-user. An entity with a property interest in the neural network may require additional compensation or remuneration from an end-user to set the second precision level to a comparatively high precision value, in consideration to the potential damage to the property interest represented by the comparatively high precision level.

The principles and method disclosed herein may be performed with any conventional activation function. Various activation functions may be currently commercially available. Such activation functions include, but are not limited to, Softmax, Rectified Linear Unit (ReLU), and Sigmoid. The transition of an output of the third layer from a first level of precision to a second level of precision can be performed with any of these activation functions. Furthermore, it is believed that the transition from the first level of precision to the second level of precision may be performed with any activation function whatsoever, without limitation.

## Claims

1. A neural network controller (802) for preventing or hindering brute force attempts to replicate a neural network, comprising one or more processors, configured to implement a neural network, the neural network comprising:
a first layer (102);
one or more second layers (104); and
a third layer (106);
wherein the first layer (103) comprises one or more first nodes; the one or more second layers (104) comprise one or more second nodes, and the third layer (106) comprises one or more third nodes;
wherein at least one node of the one or more second nodes is configured to provide an output value at a first level of precision (206);
wherein the neural network controller (802) is configured to implement a precision reduction function to reduce an output value of at least one node of the third layer to a second level of precision (602) by a rounding operation; and
wherein the second level of precision is less precise than the first level of precision;
wherein the one or more first nodes of the neural network are implemented in one or more first processors and the one or more second nodes of the neural network are implemented in a plurality of secured neural network controllers in a master-slave configuration, comprising a master secured neural network controller and one or more slave secured neural network controllers;
wherein each slave secured neural network controller performs calculations at the first level of precision for one or more second layers and/or second nodes and sends its output in an encrypted fashion to the master secured neural network controller;
wherein the master secured neural network controller performs a final activation function in which the level of precision is reduced from the first level of precision to the second level of precision, and
wherein the plurality of secured neural network controllers (802) are tamper-resistant hardware platforms.

2. The neural network controller (802) of claim 1,
wherein the precision reduction function is performed in at least one node of the third layer (106), and wherein the at least one node of the third layer (106) is configured to output the output value at the second level of precision, or
wherein the neural network controller (802) is configured to implement the precision reduction function to reduce an output value of at least one node of the third layer (106) from the first level of precision to the second level of precision.

3. The neural network controller (802) of claim 1 or 2,
wherein the neural network controller is further configured to perform at least one of sending a signal representing the output value at the second level of precision (602) or storing the output value at the second level of precision (602).

4. The neural network controller (802) of any one of claims 1 to 3,
wherein the rounding function generates a binary result of either 1 or 0.

5. The neural network controller (802) of any one of claims 1 to 4,
wherein the first layer (102) includes an input layer, the one or more second layers (104) include one or more hidden layers, and the third layer (106) includes an output layer.

6. The neural network controller (802) of any one of claims 1 to 5,
wherein the second level of precision is selectable from a plurality of precision levels.

7. A computer-implemented method for preventing or hindering brute force attempts to replicate a neural network:
providing an artificial neural network comprising:
a first layer (102);
one or more second layers (104); and
a third layer (106);
wherein the first layer (103) comprises one or more first nodes; the one or more second layers (104) comprise one or more second nodes, and the third layer (106) comprises one or more third nodes;
wherein at least one node of the one or more second nodes is configured to provide an output value at a first level of precision (206);
implementing a precision reduction function to reduce an output value of at least one node of the third layer (106) to a second level of precision (602) by a rounding operation;
wherein the second level of precision (602) is less precise than the first level of precision (206);
wherein the one or more first nodes of the neural network are implemented in one or more first processors and the one or more second nodes of the neural network are implemented in a plurality of secured neural network controllers in a master-slave configuration, comprising a master secured neural network controller and one or more slave secured neural network controllers;
wherein each slave secured neural network controller performs calculations at the first level of precision for one or more second layers and/or second nodes and sends its output in an encrypted fashion to the master secured neural network controller;
wherein the master secured neural network controller performs a final activation function in which the level of precision is reduced from the first level of precision to the second level of precision; and
wherein the plurality of secured neural network controllers (802) are tamper-resistant hardware platforms.

8. The computer-implemented method of claim 7, further comprising:
performing the precision reduction function in at least one node of the third layer (106), and outputting the output value at the second level of precision (602) from the at least one node of the third layer; or
implementing the precision reduction function to reduce an output value of at least one node of the third layer (106) from the first level of precision (206) to the second level of precision (602).

9. The computer-implemented method of claim 7 or 8, wherein the rounding function generates a binary result of either 1 or 0.

10. A non-transitory computer readable medium for preventing or hindering brute force attempts to replicate a neural network, containing instructions, which, when executed by one or more processors, cause the one or more processors to perform a method of implementing an artificial neural network, the method comprising:
providing a first layer (102);
providing one or more second layers (104); and
providing a third layer (106);
wherein the first layer (103) comprises one or more first nodes; the one or more second layers (104) comprise one or more second nodes, and the third layer (106) comprises one or more third nodes;
wherein at least one node of the one or more second nodes is configured to provide an output value at a first level of precision (206);
implementing a precision reduction function to reduce an output value of at least one node of the third layer to a second level of precision (602) by a rounding operation;
wherein the second level of precision (602) is less precise than the first level of precision (206);
wherein the one or more first nodes of the neural network are implemented in one or more first processors and the one or more second nodes of the neural network are implemented in a plurality of secured neural network controllers in a master-slave configuration, comprising a master secured neural network controller and one or more slave secured neural network controllers;
wherein each slave secured neural network controller performs calculations at the first level of precision for one or more second layers and/or second nodes and sends its output in an encrypted fashion to the master secured neural network controller;
wherein the master secured neural network controller performs a final activation function in which the level of precision is reduced from the first level of precision to the second level of precision, andwherein the plurality of secured neural network controllers (802) are tamper-resistant hardware platforms.

## Patentansprüche

1. Neuronale Netzwerksteuerung (802) zum Verhindern oder Erschweren von Brute-Force-Versuchen, ein neuronales Netzwerk zu replizieren, umfassend einen oder mehrere Prozessoren, die dazu konfiguriert sind, ein neuronales Netzwerk zu implementieren, wobei das neuronale Netzwerk Folgendes umfasst:
eine erste Schicht (102);
eine oder mehrere zweite Schichten (104); und
eine dritte Schicht (106);
wobei die erste Schicht (103) einen oder mehrere erste Knoten umfasst; die eine oder die mehreren zweiten Schichten (104) einen oder mehrere zweite Knoten umfassen, und die dritte Schicht (106) einen oder mehrere dritte Knoten umfasst;
wobei mindestens ein Knoten des einen oder der mehreren zweiten Knoten dazu konfiguriert ist, einen Ausgabewert mit einem ersten Maß an Präzision (206) bereitzustellen;
wobei die neuronale Netzwerksteuerung (802) dazu konfiguriert ist, eine Präzisionsreduzierungsfunktion zu implementieren, um einen Ausgabewert mindestens eines Knotens der dritten Schicht durch eine Rundungsoperation auf ein zweites Maß an Präzision (602) zu reduzieren; und
wobei das zweite Maß an Präzision weniger präzise als das erste Maß an Präzision ist;
wobei der eine oder die mehreren ersten Knoten des neuronalen Netzwerks in einem oder mehreren ersten Prozessoren implementiert sind und der eine oder die mehreren zweiten Knoten des neuronalen Netzwerks in einer Mehrzahl von gesicherten neuronalen Netzwerksteuerungen in einer Master-Slave-Konfiguration implementiert sind, die eine gesicherte neuronale Master-Netzwerksteuerung und eine oder mehrere gesicherte neuronale Slave-Netzwerksteuerungen umfasst;
wobei jede gesicherte neuronale Slave-Netzwerksteuerung Berechnungen mit dem ersten Maß an Präzision für eine oder mehrere zweite Schichten und/oder zweite Knoten durchführt und ihre Ausgabe in verschlüsselter Weise an die gesicherte neuronale Master-Netzwerksteuerung sendet;
wobei die gesicherte neuronale Master-Netzwerksteuerung eine Endaktivierungsfunktion durchführt, bei der das Maß an Präzision von dem ersten Maß an Präzision auf das zweite Maß an Präzision reduziert wird, und
wobei die Mehrzahl von gesicherten neuronalen Netzwerksteuerungen (802) manipulationssichere Hardwareplattformen sind.

2. Neuronale Netzwerksteuerung (802) nach Anspruch 1,
wobei die Präzisionsreduzierungsfunktion in mindestens einem Knoten der dritten Schicht (106) durchgeführt wird, und wobei der mindestens eine Knoten der dritten Schicht (106) dazu konfiguriert ist, den Ausgabewert mit dem zweiten Maß an Präzision auszugeben, oder
wobei die neuronale Netzwerksteuerung (802) dazu konfiguriert ist, die Präzisionsreduzierungsfunktion zu implementieren, um einen Ausgabewert mindestens eines Knotens der dritten Schicht (106) von dem ersten Maß an Präzision auf das zweite Maß an Präzision zu reduzieren.

3. Neuronale Netzwerksteuerung (802) nach Anspruch 1 oder 2,
wobei die neuronale Netzwerksteuerung ferner dazu konfiguriert ist, mindestens eines von Senden eines Signals, das den Ausgabewert mit dem zweiten Maß an Präzision (602) darstellt, oder Speichern des Ausgabewerts mit dem zweiten Maß an Präzision (602) durchzuführen.

4. Neuronale Netzwerksteuerung (802) nach einem der Ansprüche 1 bis 3,
wobei die Rundungsfunktion ein binäres Ergebnis von entweder 1 oder 0 erzeugt.

5. Neuronale Netzwerksteuerung (802) nach einem der Ansprüche 1 bis 4,
wobei die erste Schicht (102) eine Eingabeschicht beinhaltet, die eine oder die mehreren zweiten Schichten (104) eine oder mehrere verborgene Schichten beinhalten und die dritte Schicht (106) eine Ausgabeschicht beinhaltet.

6. Neuronale Netzwerksteuerung (802) nach einem der Ansprüche 1 bis 5,
wobei das zweite Maß an Präzision aus einer Mehrzahl von Maßen an Präzision auswählbar ist.

7. Computerimplementiertes Verfahren zum Verhindern oder Erschweren von Brute-Force-Versuchen, ein neuronales Netzwerk zu replizieren:
Bereitstellen eines künstlichen neuronalen Netzwerks, das Folgendes umfasst:
eine erste Schicht (102);
eine oder mehrere zweite Schichten (104); und
eine dritte Schicht (106);
wobei die erste Schicht (103) einen oder mehrere erste Knoten umfasst; die eine oder die mehreren zweiten Schichten (104) einen oder mehrere zweite Knoten umfassen, und die dritte Schicht (106) einen oder mehrere dritte Knoten umfasst;
wobei mindestens ein Knoten des einen oder der mehreren zweiten Knoten dazu konfiguriert ist, einen Ausgabewert mit einem ersten Maß an Präzision (206) bereitzustellen;
Implementieren einer Präzisionsreduzierungsfunktion, um einen Ausgabewert mindestens eines Knotens der dritten Schicht (106) durch eine Rundungsoperation auf ein zweites Maß an Präzision (602) zu reduzieren;
wobei das zweite Maß an Präzision (602) weniger präzise als das erste Maß an Präzision (206) ist;
wobei der eine oder die mehreren ersten Knoten des neuronalen Netzwerks in einem oder mehreren ersten Prozessoren implementiert sind und der eine oder die mehreren zweiten Knoten des neuronalen Netzwerks in einer Mehrzahl von gesicherten neuronalen Netzwerksteuerungen in einer Master-Slave-Konfiguration implementiert sind, die eine gesicherte neuronale Master-Netzwerksteuerung und eine oder mehrere gesicherte neuronale Slave-Netzwerksteuerungen umfasst;
wobei jede gesicherte neuronale Slave-Netzwerksteuerung Berechnungen mit dem ersten Maß an Präzision für eine oder mehrere zweite Schichten und/oder zweite Knoten durchführt und ihre Ausgabe in verschlüsselter Weise an die gesicherte neuronale Master-Netzwerksteuerung sendet;
wobei die gesicherte neuronale Master-Netzwerksteuerung eine Endaktivierungsfunktion durchführt, bei der das Maß an Präzision von dem ersten Maß an Präzision auf das zweite Maß an Präzision reduziert wird; und
wobei die Mehrzahl von gesicherten neuronalen Netzwerksteuerungen (802) manipulationssichere Hardwareplattformen sind.

8. Computerimplementiertes Verfahren nach Anspruch 7, das ferner Folgendes umfasst:
Durchführen der Präzisionsreduzierungsfunktion in mindestens einem Knoten der dritten Schicht (106), und Ausgeben des Ausgabewerts mit dem zweiten Maß an Präzision (602) aus dem mindestens einen Knoten der dritten Schicht; oder
Implementieren der Präzisionsreduzierungsfunktion, um einen Ausgabewert mindestens eines Knotens der dritten Schicht (106) von dem ersten Maß an Präzision (206) auf das zweite Maß an Präzision (602) zu reduzieren.

9. Computerimplementiertes Verfahren nach Anspruch 7 oder 8, wobei die Rundungsfunktion ein binäres Ergebnis von entweder 1 oder 0 erzeugt.

10. Nichtflüchtiges computerlesbares Medium zum Verhindern oder Erschweren von Brute-Force-Versuchen, ein neuronales Netzwerk zu replizieren, das Anweisungen enthält, die, wenn sie von einem oder mehreren Prozessoren ausgeführt werden, den einen oder die mehreren Prozessoren veranlassen, ein Verfahren zum Implementieren eines künstlichen neuronalen Netzwerks durchzuführen, wobei das Verfahren Folgendes umfasst:
Bereitstellen einer ersten Schicht (102);
Bereitstellen einer oder mehrerer zweiter Schichten (104); und
Bereitstellen einer dritten Schicht (106);
wobei die erste Schicht (103) einen oder mehrere erste Knoten umfasst; die eine oder die mehreren zweiten Schichten (104) einen oder mehrere zweite Knoten umfassen, und die dritte Schicht (106) einen oder mehrere dritte Knoten umfasst;
wobei mindestens ein Knoten des einen oder der mehreren zweiten Knoten dazu konfiguriert ist, einen Ausgabewert mit einem ersten Maß an Präzision (206) bereitzustellen;
Implementieren einer Präzisionsreduzierungsfunktion, um einen Ausgabewert mindestens eines Knotens der dritten Schicht durch eine Rundungsoperation auf ein zweites Maß an Präzision (602) zu reduzieren;
wobei das zweite Maß an Präzision (602) weniger präzise als das erste Maß an Präzision (206) ist;
wobei der eine oder die mehreren ersten Knoten des neuronalen Netzwerks in einem oder mehreren ersten Prozessoren implementiert sind und der eine oder die mehreren zweiten Knoten des neuronalen Netzwerks in einer Mehrzahl von gesicherten neuronalen Netzwerksteuerungen in einer Master-Slave-Konfiguration implementiert sind, die eine gesicherte neuronale Master-Netzwerksteuerung und eine oder mehrere gesicherte neuronale Slave-Netzwerksteuerungen umfasst;
wobei jede gesicherte neuronale Slave-Netzwerksteuerung Berechnungen mit dem ersten Maß an Präzision für eine oder mehrere zweite Schichten und/oder zweite Knoten durchführt und ihre Ausgabe in verschlüsselter Weise an die gesicherte neuronale Master-Netzwerksteuerung sendet;
wobei die gesicherte neuronale Master-Netzwerksteuerung eine Endaktivierungsfunktion durchführt, bei der das Maß an Präzision von dem ersten Maß an Präzision auf das zweite Maß an Präzision reduziert wird; und wobei die Mehrzahl von gesicherten neuronalen Netzwerksteuerungen (802) manipulationssichere Hardwareplattformen sind.

## Revendications

1. Commande (802) de réseau neuronal destinée à empêcher ou à gêner des tentatives par force brute visant à reproduire un réseau neuronal, comportant un ou plusieurs processeurs, configurés pour mettre en œuvre un réseau neuronal, le réseau neuronal comportant :
une première couche (102) ;
une ou plusieurs deuxièmes couches (104) ; et
une troisième couche (106) ;
la première couche (103) comportant un ou plusieurs premiers nœuds ; la ou les deuxièmes couches (104) comportant un ou plusieurs deuxièmes nœuds, et la troisième couche (106) comportant un ou plusieurs troisièmes nœuds ;
au moins un nœud parmi le ou les deuxièmes nœuds étant configuré pour fournir une valeur de sortie à un premier niveau de précision (206) ;
la commande (802) de réseau neuronal étant configurée pour mettre en œuvre une fonction de réduction de précision pour réduire une valeur de sortie d'au moins un nœud de la troisième couche à un deuxième niveau de précision (602) par une opération d'arrondi ; et
le deuxième niveau de précision étant moins précis que le premier niveau de précision ;
le ou les premiers nœuds du réseau neuronal étant mis en œuvre dans un ou plusieurs premiers processeurs et le ou les deuxièmes nœuds du réseau neuronal étant mis en œuvre dans une pluralité de commandes sécurisées de réseau neuronal dans une configuration maître-esclave, comportant une commande sécurisée maîtresse de réseau neuronal et une ou plusieurs commandes sécurisées esclaves de réseau neuronal ;
chaque commande sécurisée esclave de réseau neuronal effectuant des calculs au premier niveau de précision pour une ou plusieurs deuxièmes couches et/ou deuxièmes nœuds et envoyant sa sortie de façon cryptée à la commande sécurisée maîtresse de réseau neuronal ;
la commande sécurisée maîtresse de réseau neuronal réalisant une fonction d'activation finale dans laquelle le niveau de précision est réduit du premier niveau de précision au deuxième niveau de précision, et
la pluralité de commandes sécurisées (802) de réseau neuronal étant des plates-formes matérielles inviolables.

2. Commande (802) de réseau neuronal selon la revendication 1,
la fonction de réduction de précision étant réalisée dans au moins un nœud de la troisième couche (106), et le ou les nœuds de la troisième couche (106) étant configurés pour délivrer la valeur de sortie au deuxième niveau de précision, ou
la commande (802) de réseau neuronal étant configurée pour mettre en œuvre la fonction de réduction de précision pour réduire une valeur de sortie d'au moins un nœud de la troisième couche (106) du premier niveau de précision au deuxième niveau de précision.

3. Commande (802) de réseau neuronal selon les revendications 1 ou 2,
la commande de réseau neuronal étant en outre configurée pour effectuer au moins une action parmi l'envoi d'un signal représentant la valeur de sortie au deuxième niveau de précision (602) ou le stockage de la valeur de sortie au deuxième niveau de précision (602).

4. Commande (802) de réseau neuronal selon l'une quelconque des revendications 1 à 3,
la fonction d'arrondi générant un résultat binaire valant soit 1 soit 0.

5. Commande (802) de réseau neuronal selon l'une quelconque des revendications 1 à 4,
la première couche (102) comprenant une couche d'entrée,
la ou les deuxièmes couches (104) comprenant une ou plusieurs couches cachées, et la troisième couche (106) comprenant une couche de sortie.

6. Commande (802) de réseau neuronal selon l'une quelconque des revendications 1 à 5,
le deuxième niveau de précision étant sélectionnable parmi une pluralité de niveaux de précision.

7. Procédé mis en œuvre par ordinateur destiné à empêcher ou à gêner des tentatives par force brute visant à reproduire un réseau neuronal :
mettant en place un réseau neuronal artificiel comportant :
une première couche (102) ;
une ou plusieurs deuxièmes couches (104) ; et
une troisième couche (106) ;
la première couche (103) comportant un ou plusieurs premiers nœuds ; la ou les deuxièmes couches (104) comportant un ou plusieurs deuxièmes nœuds, et la troisième couche (106) comportant un ou plusieurs troisièmes nœuds ;
au moins un nœud parmi le ou les deuxièmes nœuds étant configuré pour fournir une valeur de sortie à un premier niveau de précision (206) ;
mettant en œuvre une fonction de réduction de précision pour réduire une valeur de sortie d'au moins un nœud de la troisième couche (106) à un deuxième niveau de précision (602) par une opération d'arrondi ;
le deuxième niveau de précision (602) étant moins précis que le premier niveau de précision (206) ;
le ou les premiers nœuds du réseau neuronal étant mis en œuvre dans un ou plusieurs premiers processeurs et le ou les deuxièmes nœuds du réseau neuronal étant mis en œuvre dans une pluralité de commandes sécurisées de réseau neuronal dans une configuration maître-esclave, comportant une commande sécurisée maîtresse de réseau neuronal et une ou plusieurs commandes sécurisées esclaves de réseau neuronal ;
chaque commande sécurisée esclave de réseau neuronal effectuant des calculs au premier niveau de précision pour une ou plusieurs deuxièmes couches et/ou deuxièmes nœuds et envoyant sa sortie de façon cryptée à la commande sécurisée maîtresse de réseau neuronal ;
la commande sécurisée maîtresse de réseau neuronal réalisant une fonction d'activation finale dans laquelle le niveau de précision est réduit du premier niveau de précision au deuxième niveau de précision ; et
la pluralité de commandes sécurisées (802) de réseau neuronal étant des plates-formes matérielles inviolables.

8. Procédé mis en œuvre par ordinateur selon la revendication 7, comportant en outre les étapes consistant à :
réaliser la fonction de réduction de précision dans au moins un nœud de la troisième couche (106), et délivrer la valeur de sortie au deuxième niveau de précision (602) à partir du ou des nœuds de la troisième couche ; ou
mettre en œuvre la fonction de réduction de précision pour réduire une valeur de sortie d'au moins un nœud de la troisième couche (106) du premier niveau de précision (206) au deuxième niveau de précision (602).

9. Procédé mis en œuvre par ordinateur selon les revendications 7 ou 8, la fonction d'arrondi générant un résultat binaire valant soit 1 soit 0.

10. Support non transitoire lisible par ordinateur destiné à empêcher ou à gêner des tentatives par force brute visant à reproduire un réseau neuronal, contenant des instructions qui, lorsqu'elles sont exécutées par un ou plusieurs processeurs, amènent le ou les processeurs à réaliser un procédé de mise en œuvre d'un réseau neuronal artificiel, le procédé comportant les étapes consistant à :
mettre en place une première couche (102) ;
mettre en place une ou plusieurs deuxièmes couches (104) ; et
mettre en place une troisième couche (106) ;
la première couche (103) comportant un ou plusieurs premiers nœuds ; la ou les deuxièmes couches (104) comportant un ou plusieurs deuxièmes nœuds, et la troisième couche (106) comportant un ou plusieurs troisièmes nœuds ;
au moins un nœud parmi le ou les deuxièmes nœuds étant configuré pour fournir une valeur de sortie à un premier niveau de précision (206) ;
mettre en œuvre une fonction de réduction de précision pour réduire une valeur de sortie d'au moins un nœud de la troisième couche à un deuxième niveau de précision (602) par une opération d'arrondi ;
le deuxième niveau de précision (602) étant moins précis que le premier niveau de précision (206) ;
le ou les premiers nœuds du réseau neuronal étant mis en œuvre dans un ou plusieurs premiers processeurs et le ou les deuxièmes nœuds du réseau neuronal étant mis en œuvre dans une pluralité de commandes sécurisées de réseau neuronal dans une configuration maître-esclave, comportant une commande sécurisée maîtresse de réseau neuronal et une ou plusieurs commandes sécurisées esclaves de réseau neuronal ;
chaque commande sécurisée esclave de réseau neuronal effectuant des calculs au premier niveau de précision pour une ou plusieurs deuxièmes couches et/ou deuxièmes nœuds et envoyant sa sortie de façon cryptée à la commande sécurisée maîtresse de réseau neuronal ;
la commande sécurisée maîtresse de réseau neuronal réalisant une fonction d'activation finale dans laquelle le niveau de précision est réduit du premier niveau de précision au deuxième niveau de précision, et la pluralité de commandes sécurisées (802) de réseau neuronal étant des plates-formes matérielles inviolables.
